# EUROPEAN PATENT APPLICATION

(11) **EP 2 696 642 A2**
(43) Date of publication of application: **12.02.2014**
(21) Application number: 12768476.9
(22) Date of filing: 06.04.2012
(51) Int. Cl.: H04W 76/02, H04W 48/08

(54) **METHOD FOR USER EQUIPMENT SETTING CONNECTION WITH NETWORK IN WIRELESS COMMUNICATION SYSTEM AND APPARATUS FOR SAME**

(30) Priority: 08.04.2011 US 201161473173 P
(71) Applicant: LG Electronics Inc., Yeongdeungpo-gu Seoul 150-721 (KR)
(72) Inventor: LEE, Youngdae, Anyang-si Gyeonggi-do 431-080 (KR); JUNG, Sunghoon, Anyang-si Gyeonggi-do 431-080 (KR); CHUN, Sungduck, Anyang-si Gyeonggi-do 431-080 (KR); PARK, Sungjun, Anyang-si Gyeonggi-do 431-080 (KR); YI, Seungjune, Anyang-si Gyeonggi-do 431-080 (KR)
(74) Representative: Urner, Peter
(86) International application number: PCT/KR2012/002623
(87) International publication number: WO 2012/138171

(57) **Abstract**

In the present invention, a method for a user equipment setting a connection with a network in a wireless communication system is disclosed, and more particularly, the method comprises the following steps: receiving a plurality of timer values from the network through a system information; and transmitting a connection request message including a reason for a specific connection to the network, wherein each of the plurality of timer values are used when transmitting the connection request message, depending on a respective corresponding connection reason, and the reason for the specific connection corresponds to a specific timer value from the plurality of timer values.

## Description

### TECHNICAL FIELD

The present invention relates to a wireless communication system, and more particularly, to a method of establishing a connection to a network, which is established by a user equipment in a wireless communication system and an apparatus therefor.

### BACKGROUND ART

3GPP LTE (3^{rd} generation partnership project long term evolution hereinafter abbreviated LTE) communication system is schematically explained as an example of a wireless communication system to which the present invention is applicable.

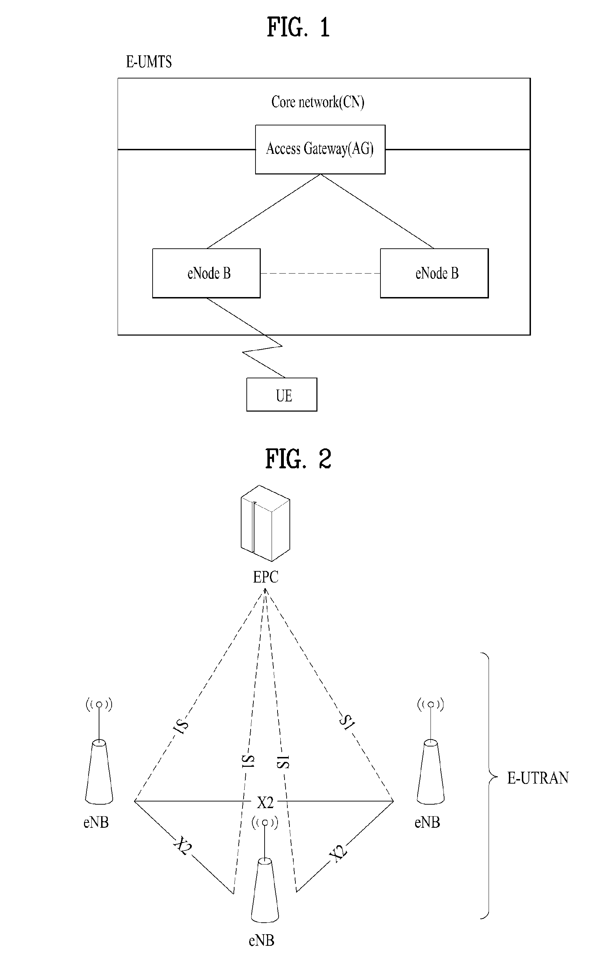

FIG. 1 is a schematic diagram of E-UMTS network structure as one example of a wireless communication system. E-UMTS (evolved universal mobile telecommunications system) is a system evolved from a conventional UMTS (universal mobile telecommunications system). Currently, basic standardization works for the E-UMTS are in progress by 3GPP. E-UMTS is called LTE (long term evolution) system in general. Detailed contents for the technical specifications of UMTS and E-UMTS refers to release 7 and release 8 of "3^{rd} generation partnership project; technical specification group radio access network", respectively.

Referring to FIG. 1, E-UMTS includes a user equipment (UE), an eNode B (eNB), and an access gateway (hereinafter abbreviated AG) connected to an external network in a manner of being situated at the end of a network (E-UTRAN). The eNode B may be able to simultaneously transmit multi data streams for a broadcast service, a multicast service and/or a unicast service.

One eNode B contains at least one cell. The cell provides a downlink transmission service or an uplink transmission service to a plurality of user equipments by being set to one of 1.25 MHz, 2.5 MHz, 5 MHz, 10 MHz, 15 MHz, and 20 MHz of bandwidths. Different cells can be configured to provide corresponding bandwidths, respectively. An eNode B controls data transmissions/receptions to/from a plurality of the user equipments. For a downlink (hereinafter abbreviated DL) data, the eNode B informs a corresponding user equipment of time/frequency region on which data is transmitted, coding, data size, HARQ (hybrid automatic repeat and request) related information and the like by transmitting DL scheduling information. And, for an uplink (hereinafter abbreviated UL) data, the eNode B informs a corresponding user equipment of time/frequency region usable by the corresponding user equipment, coding, data size, HARQ-related information and the like by transmitting UL scheduling information to the corresponding user equipment. Interfaces for user-traffic transmission or control traffic transmission may be used between eNode Bs. A core network (CN) consists of an AG (access gateway) and a network node for user registration of a user equipment and the like. The AG manages a mobility of the user equipment by a unit of TA (tracking area) consisting of a plurality of cells.

Wireless communication technologies have been developed up to LTE based on WCDMA. Yet, the ongoing demands and expectations of users and service providers are consistently increasing. Moreover, since different kinds of radio access technologies are continuously developed, a new technological evolution is required to have a future competitiveness. Cost reduction per bit, service availability increase, flexible frequency band use, simple structure/open interface and reasonable power consumption of user equipment and the like are required for the future competitiveness.

### DISCLOSURE OF THE INVENTION

### TECHNICAL TASK

Accordingly, the present invention intends to propose a method of establishing a connection to a network, which is established by a user equipment in a wireless communication system and an apparatus therefor in the following description based on the discussion mentioned in the foregoing description.

### TECHNICAL SOLUTION

To achieve these and other advantages and in accordance with the purpose of the present invention, as embodied and broadly described, according to one embodiment, a method for establishing a connection to a networkat a user equipment in a wireless communication system includes the steps of receiving a plurality of timer values from the network through a system information and transmitting a connection request message including a specific establishment cause to the network, wherein each of a plurality of the timer values is used when the connection request message is transmitted according to a corresponding establishment cause and wherein the specific establishment cause corresponds to a specific timer value among a plurality of the timer values.

Preferably, a plurality of the timer values is intended for one timer. Or, each of a plurality of the timer values is intended for a corresponding timer. In particular, the one timer may correspond to a T300 timer.

More preferably, the specific establishment cause corresponds to at least one selected from a group consisting of an MTC (machine type communication) access, a delay tolerant access, and a low priority access. And, the system information corresponds to a system information block type 2 (SIB 2).

And, the method further includes the steps of operating a timer and if a specific condition is satisfied, stopping the operated timer, wherein the specific condition corresponds to at least one selected from the group consisting of a connection establishment message reception, a connection rejection message reception, a cell reselection, and a connection establishment cancellation from an upper layer.

Moreover, the method further includes the steps of operating a timer and being expired the operated timer, wherein if the timer is expired, the method informs an upper layer of a failure of a connection establishment procedure.

The specific timer value may correspond to a greatest value among a plurality of the timer values.

To further achieve these and other advantages and in accordance with the purpose of the present invention, according to a different embodiment, a method for establishing a connection to a user equipment, at a network in a wireless communication system includes the steps of transmitting a plurality of timer values to the user equipment through a system information and receiving a connection request message including a specific establishment cause from the user equipment, wherein each of a plurality of the timer values is used when the user equipment transmits the connection request message according to a corresponding establishment cause and wherein the specific establishment cause corresponds to a specific timer value among a plurality of the timer values.

### ADVANTAGEOUS EFFECTS

According to embodiment of the present invention, a delay tolerant access supportive of user equipment can efficiently establish a connection to a network in a wireless communication system.

Effects obtainable from the present invention may be non-limited by the above mentioned effects. And, other unmentioned effects can be clearly understood from the following description by those having ordinary skill in the technical field to which the present invention pertains.

### DESCRIPTION OF DRAWINGS

FIG. 1 is a schematic diagram of E-UMTS network structure as one example of a wireless communication system;
FIG. 2 is a conceptual diagram of E-UTRAN (evolved universal terrestrial radio access network) network structure;
FIG. 3 is a diagram for structures of control and user planes of radio interface protocol between a 3GPP radio access network standard-based user equipment and E-UTRAN;
FIG. 4 is a diagram for explaining physical channels used for 3GPP system and a general signal transmission method using the physical channels;
FIG. 5 is a diagram for a structure of a radio frame in LTE system;
FIG. 6 is a diagram for explaining a general transceiving method using a paging message;
FIG. 7 is a diagram for explaining a structure of an MTC (machine type communication);
FIG. 8 is a flowchart for an example of a process of RRC connection between a MTC UE and a network according to a first embodiment of the present invention;
FIG. 9 is a flowchart for an example of a process of RRC connection between a MTC UE and a network according to a first embodiment of the present invention;
FIG. 10 is a block diagram for a configuration of a communication device according to embodiment of the present invention.

### BEST MODE

### MODE FOR INVENTION

In the following description, compositions of the present invention, effects and other characteristics of the present invention can be easily understood by the embodiments of the present invention explained with reference to the accompanying drawings. Embodiments explained in the following description are examples of the technological features of the present invention applied to 3GPP system.

In this specification, the embodiments of the present invention are explained using an LTE system and an LTE-A system, which is exemplary only. The embodiments of the present invention are applicable to various communication systems corresponding to the above mentioned definition.

FIG. 2 is a conceptual diagram of E-UTRAN (evolved universal terrestrial radio access network) network structure. In particular, the E-UTRAN system is a system evolved from a conventional UTRAN system. The E-UTRAN consists of cells (eNBs) and the cells are connected to each other via X2 interface. A cell is connected to a user equipment via a radio interface and is connected to EPC (evolved packet core) through S1 interface.

The EPC includes MME (mobility management entity), S-GW (serving-gateway) and PDN-GW (packet data network-gateway). The MME has an access information of a user equipment or information on a capability of a user equipment. This information is mainly used for a mobility management of user equipment. The S-GW is a gateway having E-UTRAN as an end point. The PDN-GW is a gateway having PDN (packet data network) as an end point.

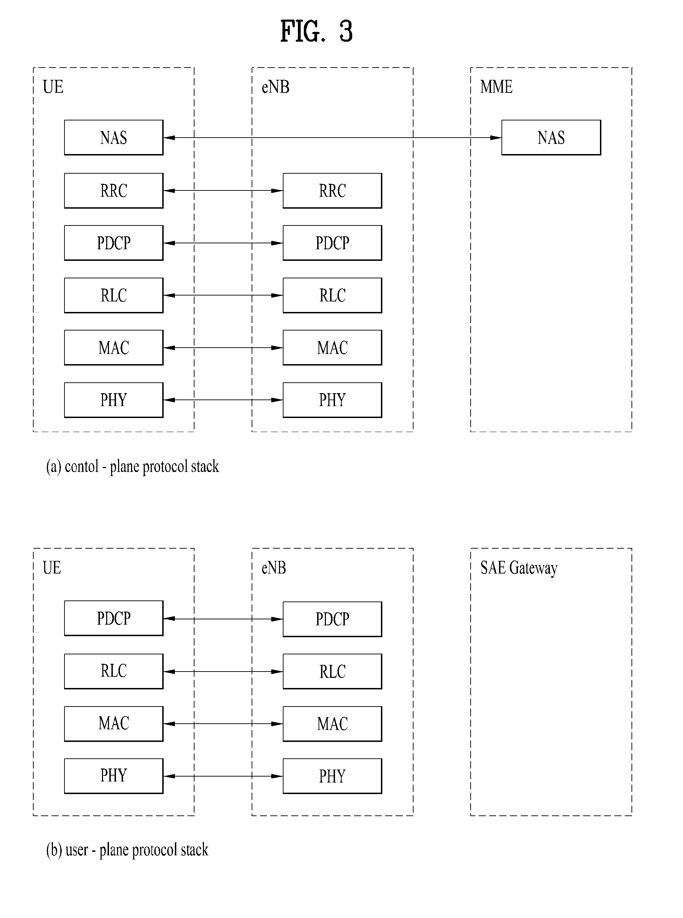

FIG. 3 is a diagram for structures of control and user planes of radio interface protocol between a 3GPP radio access network standard-based user equipment and E-UTRAN. The control plane means a path on which control messages used by a user equipment (UE) and a network to manage a call are transmitted. The user plane means a path on which such a data generated in an application layer as audio data, internet packet data, and the like are transmitted.

A physical layer, which is a first layer, provides higher layers with an information transfer service using a physical channel. The physical layer is connected to a medium access control layer situated above via a transport channel. Data moves between the medium access control layer and the physical layer on the transport channel. Data moves between a physical layer of a transmitting side and a physical layer of a receiving side on the physical channel. The physical channel utilizes time and frequency as radio resources. Specifically, the physical layer is modulated by OFDMA (orthogonal frequency division multiple access) scheme in DL and the physical layer is modulated by SC-FDMA (single carrier frequency division multiple access) scheme in UL.

Medium access control (hereinafter abbreviated MAC) layer, a radio link control (hereinafter abbreviated RLC) layer, and a packet data convergence protocol (hereinafter abbreviated PDCP) layer exist in a second layer. The MAC layer of the second layer performs a role of mapping various logical channels to various transport channels. And, the MAC layer performs a role of logical channel multiplexing in a manner of mapping many logical channels to one transport channel. The MAC layer is connected to the RLC layer on a logical channel. The logical channel can be mainly divided into a control channel transmitting information of a control plane and a traffic channel transmitting information of a user plane according to the information to be transmitted.

The RLC layer of the second layer performs a role of controlling a data size making appropriate for a lower layer to transmit a data to a radio section in a manner of performing segmentation and concatenation for the data received from an upper layer. The RLC layer provides 3 operation modes such as a transparent mode (TM), an unacknowledged mode (UM), and an acknowledged mode (AM) to secure various QoS (quality of service) requested by a radio bearer (RB). In particular, AM RLC performs a re-transmission function for a reliable data transmission via an automatic repeat and request (ARQ) function.

PDCP (packet data convergence protocol) layer of the second layer performs a header compression function reducing a size of an IP packet header, which includes relatively big and unnecessary control information, to transmit an IP packet in a radio section of a narrow band in case of transmitting such an IP packet as IPv4 or IPv6. The header compression function enables necessary information of a header part of a data to be transmitted only, thereby enhancing transmission efficiency in a radio section. The PDCP layer performs a security function as well in LTE system. The security function consists of ciphering for preventing a third party from monitoring a data and integrity protection for preventing a third party from manipulating a data.

As mentioned earlier, the function performed in the PDCP layer includes the header compression, the ciphering, the integrity protection, a PDCP sequence number maintenance, and the like. These functions are selectively performed according to a kind of the RB.

Radio resource control (hereinafter abbreviated RRC) layer situated in the lowest location of a 3^{rd} layer is defined on a control plane only. The RRC layer is responsible for control of logical channels, transport channels and physical channels in association with a configuration, a re-configuration and a release of radio bearers (hereinafter abbreviated RBs). The RB indicates a service provided by the 2^{nd} layer for a data delivery between the user equipment and the network. To this end, the RRC layer of the user equipment and the RRC layer of the network exchange a RRC message with each other.

The radio bearer (RB) can be mainly divided into a signaling radio bearer (SRB) used for transmitting an RRC message in a control plane and a data radio bearer (DRB) used for transmitting a user data in a user plane. The DRB can be divided into an UM DRB using an UL RLC and an AM DRB using an AM RLC according to an operating mode of the RLC.

In the following description, an RRC state of a user equipment and an RRC connecting method are explained. First of all, the RRC state may indicate whether the RRC of the user equipment is logically connected to the RRC of the E-UTRAN. If the RRCs are logically connected together, such a state can be named 'RRC_CONNECTED state'. Otherwise, such a state can be named 'RRC_IDLE state'.

Since E-UTRAN is able to recognize an existence of user equipment in the RRC_CONNECTED state by cell unit, the E-UTRAN is able to effectively control the corresponding user equipment. On the other hand, the E-UTRAN is unable to recognize the user equipment in the RRC_IDLE state by the cell unit. Hence, core network (CN) may manage the user equipment in the RRC_IDLE state by tracking area (TA) unit, which is a unit of area larger than a cell. Therefore, in order for the user equipment in RRC_IDLE state to receive such a service as voice or a data from the cell, the corresponding user equipment should make a transition to an RRC_CONNECTED state.

When a user initially turns on a power of a user equipment, the user equipment searches for an appropriate cell and then stays in RRC_IDLE state in the found cell. If the user equipment staying in the RRC_IDLE state needs to establish an RRC connection, the user equipment establishes the RRC connection with an RRC of E-UTRAN and then makes a transition to RRC_CONNECTED state. In this case, a case of establishing an RRC connection may include a case that an uplink data transmission is required due to such a reason as a user's call attempt and the like, a case that a response message needs to be sent in response to a reception of a paging message from the E-UTRAN, and the like.

Meanwhile, an NAS (Non-access stratum) layer situated at the above of an RRC layer performs such a function as a session management and a mobility management and the like. In the NAS layer, two states, which correspond to an EMM (EPS mobility management) registered state (EMM-REGISTERED) and an EMM unregistered state (EMM-UNREGISTERED) are defined for a mobility management of a user equipment. These two states are applied to the user equipment and MME. An initial UE corresponds to the state of the EMM unregistered. The user equipment performs a process of registering to a corresponding network to access the network via an initial attach procedure. If the attach procedure is successfully performed, the user equipment and the MME become the state of EMM registered.

In particular, in the NAS layer, two states, which correspond to an ECM (EPS connection management) idle state (ECM_IDLE) and an ECM connected state (ECM_CONNECTED), are defined to manage a signaling connection between a user equipment and an EPC. These two states are applied to the user equipment and MME. If a user equipment in the state of ECM idle establishes an RRC connection with E-UTRAN, the corresponding user equipment becomes the user equipment in the state of ECM connected. If the MME in the state of ECM idle establishes an S1 connection with E-UTRAN, the MME becomes the MME in the state of ECM connected.

When a user equipment is in a state of ECM idle, E-UTRAN does not have information (context) on the user equipment. Hence, the user equipment in the state of ECM idle performs such a UE-based mobility related procedure as a cell selection, a cell reselection, or the like without receiving a network command. On the contrary, when a user equipment is in a state of ECM connected, mobility of the user equipment is managed by the network command. If a position of a user equipment in a state of ECM idle changes from the position of which the network is aware, the corresponding position of the user equipment is informed to the network via a TA (tracking area) update process by the user equipment.

In LTE system, a single cell consisting of an eNode B is set to one of 1.25 MHz, 2.5 MHz, 5 MHz, 10 MHz, 15 MHz, and 20 MHz of bandwidths and then provides a downlink or uplink transmission service to a plurality of user equipments. Different cells can be configured to provide corresponding bandwidths, respectively.

DL transport channels for transmitting data from a network to a user equipment include a BCH (broadcast channel) for transmitting a system information, a PCH (paging channel) for transmitting a paging message, a downlink SCH (shared channel) for transmitting a user traffic or a control message and the like. DL multicast/ broadcast service traffic or a control message may be transmitted on the DL SCH or a separate DL MCH (multicast channel).

Meanwhile, UL transport channels for transmitting data from a user equipment to a network include a RACH (random access channel) for transmitting an initial control message, an uplink SCH (shared channel) for transmitting a user traffic or a control message. A logical channel, which is situated above a transport channel and mapped to the transport channel, includes a BCCH (broadcast channel), a PCCH (paging control channel), a CCCH (common control channel), a MCCH (multicast control channel), a MTCH (multicast traffic channel) and the like.

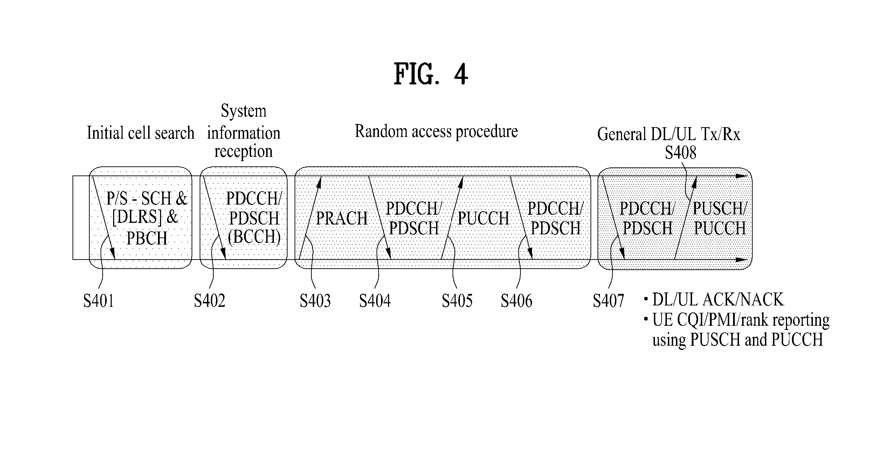

FIG. 4 is a diagram for explaining physical channels used for 3GPP system and a general signal transmission method using the physical channels.

If a power of a user equipment is turned on or the user equipment enters a new cell, the user equipment may perform an initial cell search job for matching synchronization with an eNode B and the like [S401]. To this end, the user equipment may receive a primary synchronization channel (P-SCH) and a secondary synchronization channel

(S-SCH) from the eNode B, may be synchronized with the eNode B and may then obtain information such as a cell ID and the like. Subsequently, the user equipment may receive a physical broadcast channel from the eNode B and may be then able to obtain intra-cell broadcast information. Meanwhile, the user equipment may receive a downlink reference signal (DL RS) in the initial cell search step and may be then able to check a DL channel state.

Having completed the initial cell search, the user equipment may receive a physical downlink shared control channel (PDSCH) according to a physical downlink control channel (PDCCH) and information carried on the physical downlink control channel (PDCCH). The user equipment may be then able to obtain more detailed system information [S402].

Meanwhile, if a user equipment initially accesses an eNode B or does not have a radio resource for transmitting a signal, the user equipment may be able to perform a random access procedure to complete the access to the base station [S403 to S406]. To this end, the user equipment may transmit a specific sequence as a preamble on a physical random access channel (PRACH) [S403] and may be then able to receive a response message on PDCCH and the corresponding PDSCH in response to the preamble [S404]. In case of a contention based random access procedure (RACH), it may be able to additionally perform a contention resolution procedure.

Having performed the above mentioned procedures, the user equipment may be able to perform a PDCCH/PDSCH reception [S407] and a PUSCH/PUCCH (physical uplink shared channel/physical uplink control channel) transmission [S408] as a general uplink/downlink signal transmission procedure. In particular, the user equipment receives a DCI (downlink control information) on the PDCCH. In this case, the DCI contains such control information as information on resource allocation to the user equipment. The format of the DCI varies in accordance with its purpose.

Meanwhile, control information transmitted to an eNode B from a user equipment via UL or the control information received by the user equipment from the eNode B includes downlink/uplink ACK/NACK signals, CQI (Channel Quality Indicator), PMI (Precoding Matrix Index), RI (Rank Indicator) and the like. In case of 3GPP LTE system, the user equipment may be able to transmit the aforementioned control information such as CQI/PMI/RI and the like on PUSCH and/or PUCCH.

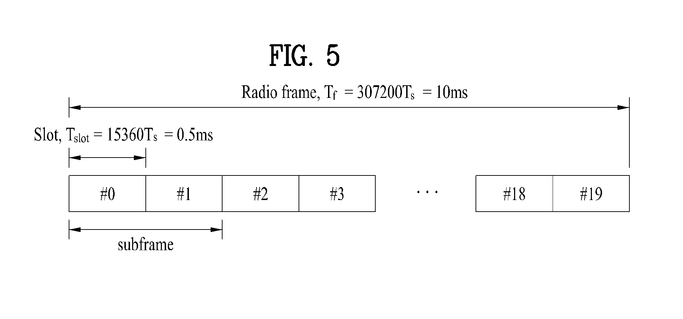

FIG. 5 is a diagram for a structure of a radio frame used in an LTE system.

Referring to FIG. 5, one radio frame has a length of 10 ms (327,200 × T_{S}) and is constructed with 10 subframes in equal size. Each of the subframes has a length of 1 ms and is constructed with two slots. Each of the slots has a length of 0.5 ms (15,360 × T_{S}). In this case, Tₛ indicates a sampling time and is represented as Tₛ = 1/ (15 kHz × 2048) = 3.2552 × 10⁻⁸ (i.e., about 33 ns). The slot includes a plurality of OFDM symbols in a time domain and also includes a plurality of resource blocks (RBs) in a frequency domain. In the LTE system, one resource block includes '12 subcarriers × 7 or 6 OFDM symbols'. A transmission time interval (TTI), which is a unit time for transmitting data, can be determined by at least one subframe unit. The aforementioned structure of a radio frame is just exemplary. And, the number of subframes included in a radio frame, the number of slots included in a subframe and the number of OFDM symbols included in a slot may be modified in various ways.

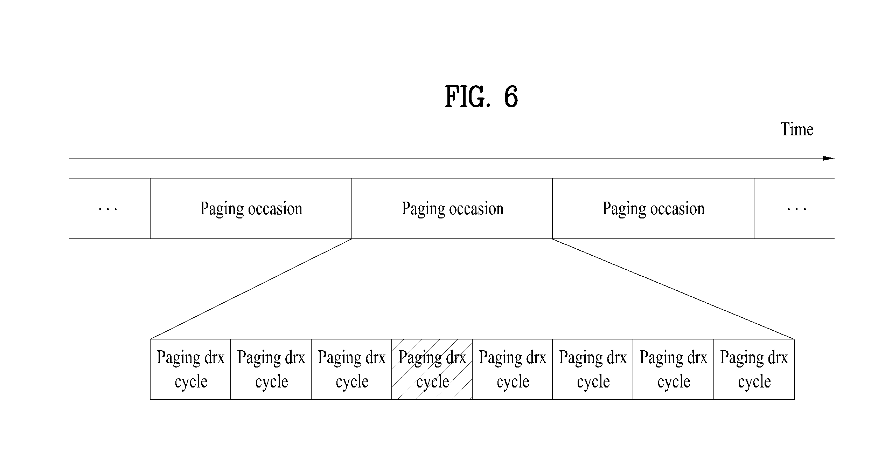

FIG. 6 is a diagram for explaining a general transceiving method using a paging message.

Referring to FIG. 6, a paging message includes a paging record consisting of a paging cause, a user equipment identity and the like. When the paging message is received, a user equipment may be able to perform a discontinuous reception (DRX) cycle for the purpose of power consumption reduction.

Specifically, a network may configure a plurality of paging occasions (PO) on every time cycle, which is called a paging cycle (paging DRX cycle). And, the network enables a specific user equipment to obtain a paging message by receiving a specific paging occasion only. The user equipment does not receive any paging channel except the corresponding specific paging occasion and may stay in an idle state to reduce power consumption. One paging occasion corresponds to one TTI (transmission time interval).

An eNode B and a user equipment use a paging indicator (hereinafter abbreviated PI) as a specific value for indicating a transmission of a paging message. The eNode B may define a specific identifier (e.g., paging-radio network temporary identity (P-RNTI)) with the purpose of PI usage and then may be able to inform the user equipment of a transmission of a paging information. For instance, the user equipment wakes up on every DRX cycle and then receives one subframe to know whether a paging message has appeared. If the P-RNTI exists on a L1/L2 control channel (PDCCH) of the received subframe, the user equipment may be able to know that a paging message exists on a PDSCH of the corresponding subframe. And, if the paging message includes a user equipment identifier (e.g., IMSI) of the user equipment, the user equipment may be able to receive a service in response to the eNode B (e.g., RRC connection or system information reception).

In the following description, system information is explained. First of all, the system information may include essential information a user equipment should know to access a network. Therefore, the user equipment should receive all system informations before accessing an eNode B and have latest system information all the time. Since system information is the information all user equipments in a cell should be aware of, the eNode B broadcasts the system information periodically.

System information may be divided into a master information block (MIB), a scheduling block (SB) and a system information block (SIB). The MIB enables a user equipment to know a physical configuration, e.g., bandwidth of a corresponding cell. Transmission information (e.g., transmission periods, etc.) of the SIBs are indicated by the SB. The SIB is a set of system informations related to each other. For instance, a specific SIB contains information on a neighbor cell only and a different SIB contains information on an uplink radio channel used by the user equipment only.

In order to inform the user equipment of whether the system information is modified, the e Node B sends a paging message. In this case, the paging message includes a system information change indicator. The user equipment receives the paging message according to a paging cycle. If the paging message includes the system information change indicator, the user equipment receives the system information transmitted via the BCCH, which is a logical channel.

In the following description, a cell selection and reselection procedures are explained.

First of all, if a power of a user equipment is turned on, the user equipment should perform preparation procedures to receive a service in a manner that the user equipment selects a cell having an appropriate quality. The user equipment in an idle state should be ready to receive a service from a corresponding cell in a manner that the user equipment selects a cell having an appropriate quality all the time. For instance, the user equipment whose power has been just turned on should select a cell having an appropriate quality to register for a network. When the user equipment in RRC_CONNECTED state enters a state of RRC_IDLE, the user equipment should select a cell to stay therein in RRC_IDLE state. Thus, in order for the user equipment to stay in such a service-standby state as an RRC_IDLE state, a procedure for selecting a cell that meets a specific condition is called a cell selection. Since the cell selection is currently performed under a condition that the user equipment has not determine a cell to stay therein in the RRC_IDLE state yet, a most significant point is to select a cell as quickly as possible. Therefore, if a cell provides a radio signal quality equal to or greater than a prescribed reference, although the cell fails in providing a best radio signal quality to the user equipment, the cell can be selected in the cell selection procedure performed by the user equipment.

If the user equipment selects a cell that meets a cell selection reference, the user equipment receives information necessary for operations in RRC_IDLE state of the user equipment in the corresponding cell from system information of the corresponding cell. Having received all informations necessary for the operations in RRC_IDLE state, the user equipment makes a request for a service to a network or stands by in RRC_IDLE state to receive a service from the network.

After the user equipment has selected a specific cell through the cell selection procedure, a strength or quality of a signal between the user equipment and an eNode B may change due to a mobility of the user equipment, a change of a radio environment or the like. Hence, in case that the quality of the selected cell is degraded, the user equipment may be able to select a different cell providing a better quality. Thus, in case of selecting a cell again, the user equipment selects a cell providing a signal quality better than that of a currently selected cell in general. This procedure is called a cell reselection. In aspect of a quality of a radio signal, the basic object of the cell reselection procedure is to select a cell providing a best quality to the user equipment in general. Aside from the aspect of the quality of the radio signal, a network determines a priority per frequency and may then inform the user equipment of the determined priority. Having received this priority, the user equipment may preferentially consider the received priority in a cell reselection procedure other than a radio signal quality reference.

In the following description, MTC (machine type communication) is explained.

The MTC may generally mean a communication established between a machine and another machine without human involvement. A user equipment used for the MTC is an MTC device. The MTC can be called an M2M (machine to machine). A service provided by the MTC has difference from the service provided by the communication, which is involved by human being. The service provided by the MTC includes the services of various scopes as follows. For instance, the MTC provides such a service as tracking, metering, payment system, health care service, remote controlling, and the like.

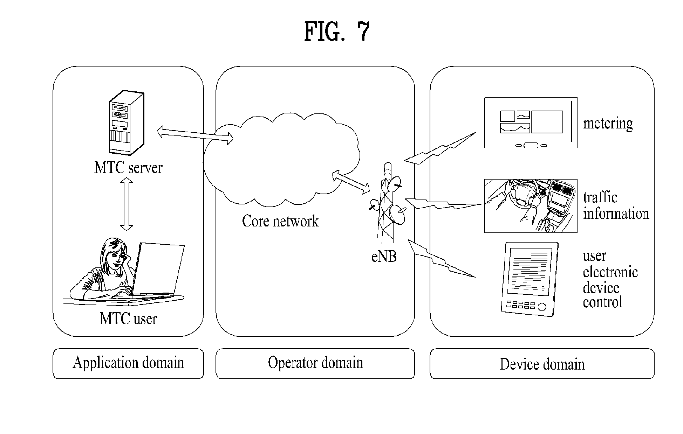

FIG. 7 is a diagram for explaining a structure of an MTC (machine type communication).

An MTC device performs a communication with a different MTC device or an MTC server via a mobile communication network. Referring to FIG. 7, the MTC server may be able to provide such a service provided by the MTC device as metering, road information, user electronic device control, and the like to an MTC user.

In order to efficiently support the MTC service, such characteristics of the MTC device as a low mobility of the MTC device, time tolerant (or delay tolerant), latency tolerance, small data transmission, low priority access and the like may be considered. For this sort of reason, the MTC device can be called a delay tolerant access supportive of user equipment.

In particular, it may assume that a plurality of MTC devices may exist in a single cell. Hence, in case that a communication service is simultaneously provided to a plurality of the MTC devices, all of the MTC devices should establish an RRC connection with a network.

Meanwhile, a timer T300 is used in an RRC connection establishment procedure. A user equipment operates the timer T300 while transmitting an RRC connection request message. And, in case of receiving an RRC connection setup message or an RRC connection rejection message, in case of performing a cell reselection, or in case of occurring a termination of the RRC connection establishment by an upper layer, an operation of the T300 is stopped. As soon as the operation of the timer T300 is expired, an RRC layer of the user equipment informs the upper layer of a failure of the RRC connection establishment and ends the RRC connection establishment procedure.

The T300 is a cell-specific parameter broadcasted via a system information block type 2 (SIB 2) and corresponds to a common value to all user equipments. And, the T300 is the value having a range from 100 ms to 2 seconds. Hence, if a user equipment corresponds to a delay tolerant access supportive of user equipment, i.e., an MTC user equipment, the value of the T300 tends to be too short.

Therefore, in order to solve a problem of a prior art, the present invention proposes that a user equipment receives a timer value for a specific purpose and a timer value of a general purpose via system information and in case of establishing a connection to a network for a specific purpose, the user equipment uses the timer value for a specific purpose and in case of establishing a connection to the network for a purpose, which is not a specific purpose, the user equipment uses the timer value of a general purpose.

Both the timer of a specific purpose and the timer of a general purpose can be broadcasted by the SIB 2. Or, unlike the timer of a general purpose, the timer of a specific purpose can be broadcasted by an SIB of a type. Preferably, in order to reflect a delay tolerant access characteristic of the MTC user equipment, the timer of a specific purpose has a value longer than that of the timer of a general purpose.

### < 1^{st} embodiment >

In the first embodiment of the present invention, it is proposed that a user equipment separately receives a cell-specific timer T300 and a specific timer T30X for an MTC UE from a network.

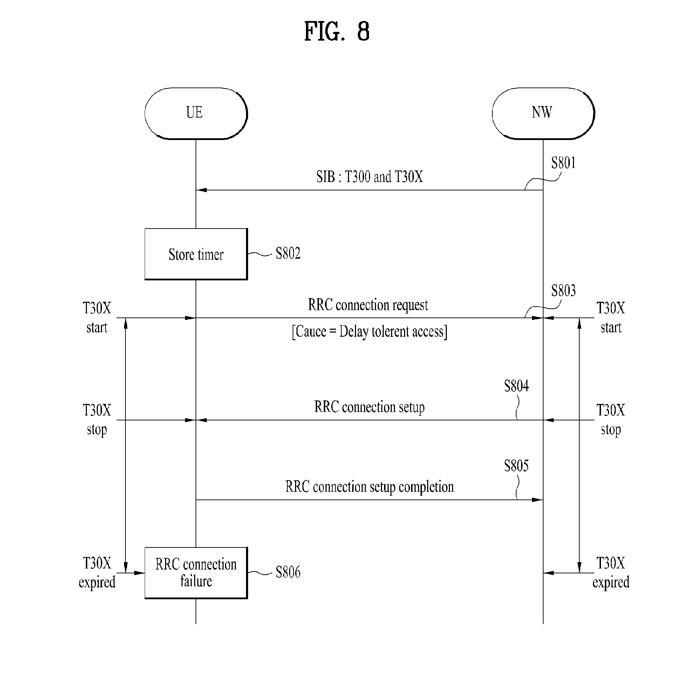

FIG. 8 is a flowchart for an example of a process of RRC connection between a MTC UE and a network according to a first embodiment of the present invention.

Referring to FIG. 8, in the step S801, the MTC UE can receive the cell-specific timer T300 and the specific timer T30X from a network via the SIB 2 for an RRC connection establishment procedure. Having received the SIB 2, the user equipment stores the cell-specific timer 300 and the specific timer T30X in the step S802.

If the MTC UE intends to perform the RRC connection establishment procedure due to a reason one of an MTC related procedure which is not a general access, a delay tolerant access, and a low priority access, the user equipment initiates an operation of the specific timer T30X. On the other hand, if the MTC UE intends to perform the RRC connection establishment procedure due to such a general reason as a handover, the user equipment initiates an operation of the cell-specific timer T300. Hence, the cell-specific timer T300 and the specific timer T30X cannot operate at the same time.

More specifically, in the step S803, the user equipment transmits an RRC connection request message of which an establishment cause is configured with one of the MTC access, the delay tolerant access, and the low priority access to a network. Thereafter, the user equipment and the network can initiate the operation of the specific timer T30X.

Subsequently, in the step S804, the user equipment can receive an RRC connection setup message from the network and can transmit an RRC connection setup completion message to the network in response to the RRC connection setup message in the step S805. After the RRC connection setup completion message is transmitted to the network or while the RRC connection setup completion message is transmitted to the network, the user equipment informs an upper layer of a success of the RRC connection establishment procedure and ends the RRC connection establishment procedure. In this case, the timer T30X can be stopped. Specifically, the timer T30X can be stopped by one of a case of receiving the RRC connection setup message, a case of transmitting the RRC connection setup completion message, and a case of receiving a positive response for the RRC connection setup completion message.

On the other hand, if the RRC connection establishment procedure does not succeed until the specific timer T30X is expired, the user equipment informs the upper layer of a failure of the RRC connection establishment procedure and ends the RRC connection establishment procedure in the step S806.

### < 2^{nd} embodiment >

In the second embodiment of the present invention, it is proposed that the user equipment applies a different value to the T300 in the RRC connection establishment procedure of a specific purpose while using a cell-specific timer T300 from the network.

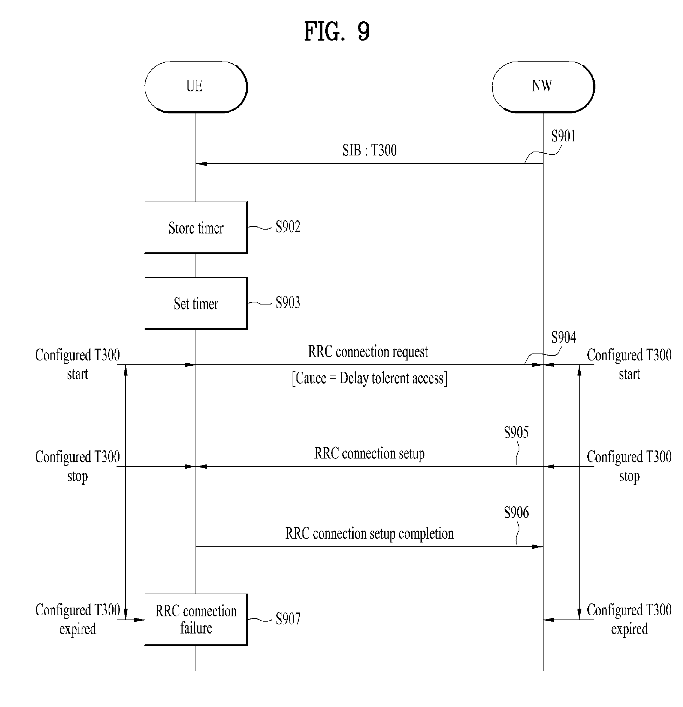

FIG. 9 is a flowchart for an example of a process of RRC connection between a MTC UE and a network according to a first embodiment of the present invention.

Referring to FIG. 9, the MTC UE can receive a cell-specific value of the T300 and a specific value for the MTC UE from the network via the SIB 2 to perform an RRC connection establishment procedure in the step S901. Having received the SIB 2, the user equipment stores the cell-specific value of the T300 and the specific value for the MTC UE in the step S902.

If the MTC UE intends to perform the RRC connection establishment procedure due to a reason one of an MTC access which is not a general access, a delay tolerant access, and a low priority access, the user equipment set the specific value to the T300 in the step S903. On the other hand, if the MTC UE intends to perform the RRC connection establishment procedure due to such a general reason as a handover, the user equipment set the cell-specific value to the T300 in the step S903.

More specifically, in the step S904, the user equipment transmits an RRC connection request message of which an establishment cause is configured with one of the MTC access, the delay tolerant access, and the low priority access to a network. Thereafter, the user equipment and the network can initiate the operation of the timer T300, which is configured with the specific value.

Subsequently, in the step S905, the user equipment can receive an RRC connection setup message from the network and can transmit an RRC connection setup completion message to the network in response to the RRC connection setup message in the step S906. After the RRC connection setup completion message is transmitted to the network or while the RRC connection setup completion message is transmitted to the network, the user equipment informs an upper layer of a success of the RRC connection establishment procedure and ends the RRC connection establishment procedure. In this case, the timer T300 configured with the specific value can be stopped. Specifically, the timer T300 configured with the specific value can be stopped by one of a case of receiving the RRC connection setup message, a case of transmitting the RRC connection setup completion message, and a case of receiving a positive response for the RRC connection setup completion message.

On the other hand, if the RRC connection establishment procedure does not succeed until the timer T300 configured with the specific value is expired, the user equipment informs the upper layer of a failure of the RRC connection establishment procedure and ends the RRC connection establishment procedure in the step S907.

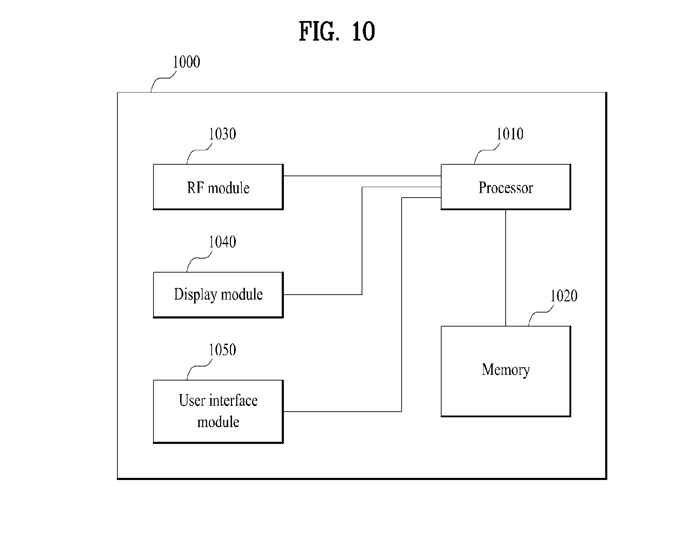

FIG. 10 is a block diagram for a configuration of a communication device according to embodiment of the present invention.

Referring to FIG. 10, a communication device 1000 may include a processor 1010, a memory 1020, an RF module 1030, a display module 1040, and a user interface module 1050.

Since the communication device 1000 is depicted for clarity of description, prescribed module(s) may be omitted in part. The communication device 1000 may further include necessary module(s). And, a prescribed module of the communication device 1000 may be divided into subdivided modules. A processor 1010 is configured to perform an operation according to the embodiments of the present invention illustrated with reference to drawings. In particular, the detailed operation of the processor 1010 may refer to the former contents described with reference to FIG. 1 to FIG. 9.

The memory 1020 is connected with the processor 1010 and stores an operating system, applications, program codes, data, and the like. The RF module 1030 is connected with the processor 1010 and then performs a function of converting a baseband signal to a radio signal or a function of converting a radio signal to a baseband signal. To this end, the RF module 1030 performs an analog conversion, amplification, a filtering, and a frequency up conversion, or performs processes inverse to the former processes. The display module 1040 is connected with the processor 1010 and displays various kinds of informations. And, the display unit 1040 can be implemented using such a well-known component as an LCD (liquid crystal display), an LED (light emitting diode), an OLED (organic light emitting diode) display and the like, by which the present invention may be non-limited. The user interface module 1050 is connected with the processor 1010 and can be configured in a manner of being combined with such a well-known user interface as a keypad, a touchscreen and the like.

The above-described embodiments correspond to combinations of elements and features of the present invention in prescribed forms. And, the respective elements or features may be considered as selective unless they are explicitly mentioned. Each of the elements or features can be implemented in a form failing to be combined with other elements or features. Moreover, it is able to implement an embodiment of the present invention by combining elements and/or features together in part. A sequence of operations explained for each embodiment of the present invention can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

In this specification, embodiments of the present invention are described centering on the data transmission/reception relations between a user equipment and an eNode B. In this disclosure, a specific operation explained as performed by an eNode B may be performed by an upper node of the eNode B in some cases. In particular, in a network constructed with a plurality of network nodes including an eNode B, it is apparent that various operations performed for communication with a user equipment can be performed by an eNode B or other networks except the eNode B. 'Base station (BS)' may be substituted with such a terminology as a fixed station, a Node B, an eNode B (eNB), an access point (AP) and the like.

Embodiments of the present invention can be implemented using various means. For instance, embodiments of the present invention can be implemented using hardware, firmware, software and/or any combinations thereof. In the implementation by hardware, a method according to each embodiment of the present invention can be implemented by at least one selected from the group consisting of ASICs (application specific integrated circuits), DSPs (digital signal processors), DSPDs (digital signal processing devices), PLDs (programmable logic devices), FPGAs (field programmable gate arrays), processor, controller, microcontroller, microprocessor and the like.

In case of the implementation by firmware or software, a method according to each embodiment of the present invention can be implemented by modules, procedures, and/or functions for performing the above-explained functions or operations. Software code is stored in a memory unit and is then drivable by a processor. The memory unit is provided within or outside the processor to exchange data with the processor through the various means known in public.

While the present invention has been described and illustrated herein with reference to the preferred embodiments thereof, it will be apparent to those skilled in the art that various modifications and variations can be made therein without departing from the spirit and scope of the invention. Thus, it is intended that the present invention covers the modifications and variations of this invention that come within the scope of the appended claims and their equivalents.

### INDUSTRIAL APPLICABILITY

Although a method of establishing a connection to a network, which is established by a user equipment in a wireless communication system and apparatus therefor are described with reference to examples applied to 3GPP LTE system, it may be applicable to various kinds of wireless communication systems as well as to the 3GPP LTE system.

## Claims

1. A method for establishing a connection to a network at a user equipment in a wireless communication system, the method comprising:
receiving a plurality of timer values from the network through a system information; and
transmitting a connection request message including a specific establishment cause to the network,
wherein each of a plurality of the timer values is used when the connection request message is transmitted according to a corresponding establishment cause and wherein the specific establishment cause corresponds to a specific timer value among a plurality of the timer values.

2. The method of claim 1, wherein a plurality of the timer values are intended for one timer.

3. The method of claim 1, wherein each of a plurality of the timer values is intended for a corresponding timer.

4. The method of claim 2, wherein the one timer corresponds to a T300 timer.

5. The method of claim 1, wherein the specific establishment cause corresponds to at least one selected from a group consisting of an MTC (machine type communication) access, a delay tolerant access, and a low priority access.

6. The method of claim 1, wherein the system information corresponds to a system information block type 2 (SIB 2).

7. The method of claim 1, further comprising:
operating a timer; and
if a specific condition is satisfied, stopping the operated timer,
wherein the specific condition corresponds to at least one selected from a group consisting of a connection establishment message reception, a connection rejection message reception, a cell reselection, and a connection establishment cancellation from an upper layer.

8. The method of claim 1, further comprising:
operating a timer; and
being expired the operated timer,
wherein if the timer is expired, the method informs an upper layer of a failure of a connection establishment procedure.

9. The method of claim 1, wherein the specific timer value corresponds to a greatest value among a plurality of the timer values.

10. A method for establishing a connection to a user equipment, at a network in a wireless communication system, the method comprising:
transmitting a plurality of timer values to the user equipment through a system information; and
receiving a connection request message including a specific establishment cause from the user equipment,
wherein each of a plurality of the timer values is used when the user equipment transmits the connection request message according to a corresponding establishment cause and wherein the specific establishment cause corresponds to a specific timer value among a plurality of the timer values.

11. The method of claim 10, wherein a plurality of the timer values are intended for one timer.

12. The method of claim 10, wherein each of a plurality of the timer values is intended for a corresponding timer.

13. The method of claim 11, wherein the one timer corresponds to a T300 timer.

14. The method of claim 10, wherein the specific establishment cause corresponds to at least one selected from a group consisting of an MTC (machine type communication) access, a delay tolerant access, and a low priority access.

15. The method of claim 10, wherein the system information corresponds to a system information block type 2 (SIB 2).

16. The method of claim 10, wherein the specific timer value corresponds to a greatest value among a plurality of the timer values.
